# EUROPEAN PATENT SPECIFICATION

(11) **EP 1 184 067 B1**
(45) Date of publication and mention of the grant of the patent: **08.11.2006**
(21) Application number: 01307244.2
(22) Date of filing: 24.08.2001
(51) Int. Cl.: B01D 53/04

(54) **Process for adsorptive purification of air**
Verfahren zur adsorptiven Reinigung von Luft
Procédé de purification d'air par adsorption

(30) Priority: 28.08.2000 US 648982; 28.08.2000 US 648984
(43) Date of publication of application: 06.03.2002
(73) Proprietor: THE BOC GROUP, INC., New Providence, NJ 07974-2082 (US)
(72) Inventor: Ojo, Florence Adeola, New Jersey 07076 (US); Fitch, Frank Roger, Bedminster, New Jersey 07921 (US); Bulow, Martin, Basking Ridge,New Jersey 07920 (US); Kumar, Ravi, Allentown, Pennsylvania 18103 (US); Huggahalli, Madhusudhan, Somerset, New Jersey 08873 (US)
(74) Representative: Wickham, Michael

(56) References cited:
- EP-A- 0 847 792
- EP-A- 0 992 274
- US-A- 5 962 358

## Description

This invention relates to adsorption, and more particularly to adsorbents for use in temperature swing and other adsorption processes for purifying a gas stream, particularly air. The invention is particularly concerned with the decrease of impurity levels of nitrogen oxides and low molecular weight hydrocarbons in air. More specifically, the invention relates to the simultaneous removal of nitrous oxide and C₂-C₅ hydrocarbon gases from air by contacting the air with a binderless zeolitic composite containing both type A crystalline units and type X crystalline units.

In cryogenic air separation units (ASUs), atmospheric air is liquefied at cryogenic temperatures and subsequently fractionally distilled into its major components, nitrogen, oxygen and argon. Since water vapor and carbon dioxide freeze at temperatures well above the temperature at which air is liquefied, these compounds must be removed from atmospheric air prior to its introduction to the ASUs to avoid clogging of ASU equipment lines by the accumulation of ice and frozen carbon dioxide in the heat exchange equipment used to chill the air to its liquefaction temperature. ASUs are commonly equipped with air prepurification units (PPUs) to remove water vapor and carbon dioxide from ASU feed air. In modern ASU plants, the PPUs contain one or more layers of adsorbent materials which selectively adsorb water vapor and/or carbon dioxide from air. Such PPUs are generally operated on either pressure swing adsorption (PSA) cycles or thermal swing adsorption (TSA) cycles. Adsorbents suitable for the removal of moisture from air include activated alumina, silica gel and sodium X zeolite, and those typically used for the removal of carbon dioxide from air include type X zeolites.

The removal of dinitrogen oxide, N₂O, which is also known as nitrous oxide, is particularly important because of its increase in concentration in the atmosphere. It is well known that N₂O is a greenhouse gas and the concentration of N₂O in the atmosphere (currently about 0.3 ppm) has been increasing steadily (by about 0.2 to 0.3% annually), over the last decade. This increase is mainly caused by anthropogenic activities as well as by emissions from various chemical processes. An excess of N₂O in cryogenic air separation units may cause solid N₂O to be deposited in and to plug heat exchange passages. Current air purification methods do not adequately remove nitrous oxide. The fact that N₂O is very stable in air, *viz.,* its "lifetime" in the atmosphere comprises about 150 years, makes the removal of N₂O in an air pre-purification unit absolutely essential in both present time and the future. It is envisaged that in the future the removal of N₂O will become as important as the removal of water and CO₂.

Accordingly, there is a clear need to develop an approved adsorption process suitable for use in air prepurification units (PPUs) to remove not only water and CO₂ but also the trace amounts of nitrogen oxides, in particular N₂O, which are present in the air being sent to a cryogenic air separation unit. In addition, great care should be taken for the removal of traces of hydrocarbons, such as low-molecular weight hydrocarbon gases ethane, propane, n-butane, iso-butane as well as any non-saturated species, such as acetylene, ethylene, propylene, the n-butylene isomers and iso-butylene, from air in PPU processes. It is also important that both hydrocarbons and plugging components such as N₂O and CO₂ be simultaneously removed in the air pre-purification process. Deposits of plugging components may create an opportunity for hydrocarbons to collect and concentrate in those deposits and thereby create a potential explosion hazard. The present invention is directed to such a solution, which aims, in particular, to a simultaneous, highly effective prepurification of air.

N₂O is not the only hazardous trace impurity present in atmospheric air. N₂O belongs to a class of hazardous impurities collectively referred to as plugging/plating components. Water and CO₂ are the other plugging/plating components removed in the PPU. These impurities freeze at cryogenic temperatures and plug passages and are deposited as solids on cold surfaces. Atmospheric air also contains several hydrocarbon impurities, notably acetylene, that must not be allowed to come in contact with liquid oxygen. These impurities are adsorbed by, for example X type zeolites used in a conventional PPU to adsorb carbon dioxide. Other hydrocarbon impurities may be permitted to enter cryogenic parts of an air separation plant and accumulate in the liquid oxygen sump in the reboiler of the low-pressure column. The air separation process also concentrates the levels of these impurities, such that their concentrations in the low-pressure column are several times greater than their concentrations in atmospheric air.

If the solubility and flammability limits of these hydrocarbons in liquid oxygen are exceeded, these compounds may be combusted, leading to small explosions and in extreme cases, to the combustion of the distillation column internals. The accumulation of hydrocarbon impurities can also take place inside the passages of heat exchangers and reboilers causing the same problems as seen in the distillation column. If they are not removed in the PPU, nitrous oxide and hydrocarbons (other than methane) may have the potential for creating various explosion hazards in the cryogenic parts of the air separation plant. There is therefore a need to remove nitrous oxide and C₂ and C₃ hydrocarbon impurities that pass through a conventional PPU. The invention makes use of a composite adsorbent comprising a hydrocarbon removal adsorbent and an adsorbent to remove oxides of nitrogen for this purpose.

According to a first aspect of the present invention there is provided the use of a composite zeolitic adsorbent upstream of a cryogenic air separation unit selectively to adsorb nitrous oxide, ethylene, ethane and propane from air that has had water vapour and carbon dioxide removed therefrom, the composite zeolite adsorbent comprising 5 to 95% by weight of zeolite A and 95 to 5% by weight of zeolite X, wherein some or all of the exchangeable cations or the zeolite A and some or all of the exchangeable cations of the zeolite X are divalent cations.

According to a second aspect of the present invention there is provided a method of purifying air comprising the step of removing upstream of a cryogenic air separation unit nitrous oxide and at least one low molecular weight hydrocarbon from the air by subjecting the air to a cyclical adsorption procedure comprising an adsorption step and an adsorbent regeneration step using a composite zeolitic adsorbent which selectively adsorbs nitrous oxide, ethylene, ethane and propane from air free of water vapour and carbon dioxide and which comprises 5 to 95% by weight of zeolite A and 95 to 5% by weight of zeolite X, and wherein some or all of the exchangeable cations of the zeolite A and some or all of the exchangeable cations of the zeolite X are divalent cations.

The composite adsorbent used in this invention is a physical mixture of primary particles (micro particles) of at least two types of adsorbents, e.g. zeolites mentioned, that stem from separate syntheses, and shaped for example by extruding or beading into micro particles of the final type, using a binder.

Preferably, the composite zeolitic adsorbent is made by a process which includes the step of contacting an agglomerate of at least one of zeolite A or zeolite X and an inert binder comprising silica, clay, alumina or combinations thereof with a reagent which effects the conversion of at least part of the inert binder to the other of zeolite A or zeolite X. More preferably, at least 95% of the inert binder is converted to zeolite A.

Preferably, the inert binder comprises silica and the reagent comprises sodium aluminate, sodium hydroxide, potassium hydroxide or mixtures thereof.
Alternatively, the inert binder is silica-alumina.

In another alternative, the inert binder comprises clay and the reagent comprises sodium hydroxide, potassium hydroxide or mixtures thereof. In a more preferred aspect, the clay comprises kaolin, metakaolin, kaolinite, nacrite, dickite, halloysite or combinations thereof. Most preferably, the clay comprises kaolin.

In yet another alternative, the inert binder comprises alumina and the reagent comprises sodium silicate and sodium hydroxide, potassium hydroxide or mixtures thereof.

Preferably, about 50 to about 100% of the exchangeable cations of the zeolite A and about 50 to about 100% of the exchangeable cations of the zeolite X comprise calcium, magnesium, strontium, barium, zinc, copper, cadmium, cobalt, manganese, iron, nickel or mixtures thereof. In a more preferred aspect, the exchangeable cations comprise calcium ions.

Preferably, at least about 50% of the zeolite X has a Si/Al atomic ratio in the range of about 0.9 to less than about 1.15.

Preferably, the composite zeolitic adsorbent comprises about 20 to about 50% by weight zeolite A and about 80 to about 50% by weight zeolite X.

Preferably, a carbon dioxide-selective adsorbent is positioned within an adsorbent vessel between the water vapor-selective adsorbent and the composite zeolitic adsorbent. In a more preferred aspect, the water vapor-selective adsorbent comprises activated alumina, silica gel, zeolite sodium X or mixtures thereof, and the carbon dioxide-selective adsorbent comprises zeolite X.

A particularly preferred method of making the composite zeolitic adsorbent comprises the step of:
(a) forming a mixture comprising (1) an agglomerate comprising silica and zeolite X comprising sodium ions or both sodium and potassium ions, the zeolite X having a Si/Al atomic ratio in the range of about 0.9 to less than about 1.25, and (2) an aqueous alkaline aluminate solution comprising sodium hydroxide, potassium hydroxide, or mixtures thereof;
(b) maintaining the mixture at a temperature in the range of about 25 to about 100° C for a period of time sufficient to convert at least 50% of the silica to zeolite A; and
(c) at least partially exchanging the product of step (b) with divalent cations.

In one aspect of this particularly preferred method, the agglomerate additionally comprises zeolite A.

In another aspect of this particularly preferred method upon completion of step (b), at least about 95% of the silica has been converted to zeolite A.

In yet another aspect of this particularly preferred method, the divalent cations comprise calcium ions.
In a yet further aspect of this particularly preferred method, the zeolite X has a Si/Al atomic ratio less than about 1.1.

The said mixture is preferably maintained in the range of about 70 to about 90° C during at least part of step (b) of the method of making the composite zeolite. Upon completion of step (c) of the method of making the composite zeolite, at least about 95% of the exchangeable cations of the zeolite A and at least about 95% of the exchangeable cations of the zeolite X of the composite zeolitic adsorbent are calcium ions.

Preferably, the cyclical adsorption procedure is temperature swing adsorption. In a preferred variation of this aspect, the adsorbent regeneration step is carried out a temperature in the range of about 150 to about 280° C.

Typically at least one low molecular weight hydrocarbon comprises CH₄, C₂ hydrocarbons, C₃ hydrocarbons, C₄ hydrocarbons, or mixtures thereof. The at least one nitrogen oxide preferably comprises nitrous oxide. The invention is particularly suited to the removal of nitrous oxide and propane impurities from air. Ethylene and ethane can also be removed.

The nitrogen oxide- and low molecular weight hydrocarbon-selective adsorbents used in the invention are preferably composites containing both at least partially divalent cation-exchanged zeolite type A crystal units and at least partly divalent cation-exchanged zeolite type X crystal units. The at least partially divalent-cation-exchanged type A zeolite crystals are effective for the adsorption of linear low molecular weight hydrocarbons, such as ethane, ethylene, propane, n-butane, etc. The at least partially divalent cation-exchanged type X zeolites, particularly calcium-exchanged type X zeolite, are highly effective for the adsorption of nitrogen oxides, particularly nitrous oxide, from gas streams. Divalent cation-exchanged type X zeolites also preferentially adsorb larger sized low molecular weight hydrocarbons, such as straight-chain, branched-chain and aromatic hydrocarbons, from gas streams. For purposes of this invention, low molecular weight hydrocarbons are defined as those having up to eight carbon atoms.

Suitable composite zeolitic adsorbents can be made by any method. One method comprises agglomerating a blend of type A and type X zeolite. Another method comprises crystallizing a sodium ion-containing or sodium ion- and potassium ion-containing silicate-aluminate hydrogel under conditions which results in the formation of a zeolitic composite which, as synthesized, contains intergrown type A and type X zeolite, and then agglomerating the intergrown zeolite with a suitable inert binder. This procedure is described in detail in our European patent application of the same date as this application and claiming priority from United States Patent Application Serial No. 09/648,802.

A more preferred method of preparing the composite zeolitic adsorbents comprises contacting a composition of at least one of zeolite A or zeolite X and an inert binder comprising silica, clay or alumina, or combinations of these, with a chemical reagent which reacts with the inert binder to form at least the other of zeolite A or zeolite X. In other words, if the initial composition contains only zeolite X, the reaction will be conducted under conditions such that at least part of the inert binder will be converted to zeolite A, and if the initial composition contains only zeolite A, the reaction will be conducted under conditions such that at least part of the inert binder will be converted to zeolite X. It is not necessary that the initial material contain only one type of zeolite, and in fact it often happens that the starting zeolite material will contain both zeolite A and zeolite X. Furthermore, it is not necessary that the inert binder be converted to only one of zeolite A or zeolite X; it can be converted to a mixture of zeolite A and zeolite X. A principal advantage of this preferred method of preparing the composite zeolitic adsorbent is that the composite can be made to be substantially free of inert binder, in which case substantially all of the composite material will have gas adsorption properties.

The relative proportions of zeolite X and zeolite A in the composite zeolite adsorbent used in the gas adsorption applications of the invention may vary over a wide range, and the desired zeolite X/zeolite A ratio will depend, inter alia, upon the particular application in which the composite will be used. If the zeolite is to be used to purify gases containing high concentrations of hydrocarbons relative to the concentration of nitrous oxide and other nitrogen oxides in the gases, it may be desirable to use composites comprising as much as 50% or more zeolite A. On the other hand, if the concentration of hydrocarbons in the gas is low relative to the concentration of nitrogen oxides in the gas, it may be preferable to use a composite comprised predominantly of zeolite X. In general, the composite may contain 5 to 95% zeolite X and 95 to 5% zeolite A, based on the total weight of zeolite X and zeolite A in the composite. In preferred embodiments the composite contains about 80 to 50% by weight zeolite X and about 20 to 50% by weight zeolite A.

Since, for most adsorption applications the preferred composite zeolitic adsorbent contains zeolite X as the major component and zeolite A as the minor component, it is preferred to use as the starting material an agglomerate comprising zeolite X as the major component. The zeolite X may be conventional to high silicon type X zeolite, defined as type X zeolite having a Si/Al atomic ratio in the range of 1.2:1 to about 1.5:1, medium silicon type X zeolite (MSX), defined as type X zeolite having a Si/Al atomic ratio in the range of 1.1:1 to about less than about 1.2:1, or low silicon type X zeolite (LSX), defined as type X zeolite having a Si/Al atomic ratio of 0.9:1 to about less than about 1.1:1. Although the theoretical minimum Si/Al atomic ratio in zeolite X is 1.0, apparent Si/Al atomic ratios of type X zeolites as low as 0.9 have been measured, due to defects in the structure of the zeolite, the presence of impurities, such as occluded alumina and/or aluminates and/or errors in measurement. For purposes of this description, it is assumed that the minimum silicon to aluminum ratio of type X zeolite is 0.9. In preferred embodiments of the invention, the agglomerate contains zeolite X having a Si/Al atomic ratio in the range of about 0.9:1 to less than about 1.2:1, i.e., a combination of MSX and LSX, and in more preferred embodiments it contains substantially only LSX, and it can be composed substantially of zeolite sodium LSX (NaLSX) or zeolite sodium-potassium LSX (Na,KLSX). As noted above, the agglomerate may additionally contain zeolite A as a minor component.

For economic reasons, zeolite X is generally synthesized from a hydrogel containing only sodium ions as neutralizing cations, so that the crystallized product will have only sodium ions as exchangeable cations. However, some manufacturing procedures call for the use of a mixture of sodium hydroxide and potassium hydroxide in the crystallization process, in which case the crystallized product will have both sodium ions and potassium ions as exchangeable cations. This is often the case when producing LSX. It has been found that when LSX is produced from hydrogels containing only sodium ions, the resulting product will have a considerable amount of zeolite A impurity. On the other hand, when the hydrogel contains both sodium and potassium ions, it is easier to prevent the formation of zeolite A. In any event, if the exchangeable cations comprise a combination of sodium ions and potassium ions, it may be desirable to convert the potassium ions to sodium ions in preparation for the divalent cation exchange (described below). This can be accomplished by, for example, contacting the zeolite composite with an aqueous solution of sodium hydroxide at an elevated temperature.

As used herein, the term "inert binder" means any binder material composed of silica, clay, alumina or combinations of these suitable for use in the agglomeration of zeolitic material and which possesses very little or no gas adsorption capability. The inert binder may be amorphous, partly crystalline or crystalline. Suitable sources of silica include waterglasses, silica sols, aerosils (fumed silicas) silica gels and precipitated silicas; Sources of alumina useful in preparing the zeolitic composites include hydrated aluminum hydroxide, pseudo-boehmite, alumina trihydrate, etc.; and suitable clays include kaolins, such as raw kaolin, calcined kaolin, metakaolin, etc., and kandites, such as kaolinite, nacrite, dickite, halloysite, etc. Inert binders comprising combinations of silica and alumina, for example, binary compositions such as silica-alumina, can also be used in the invention.

The reaction that converts the inert binder to zeolite is tailored to produce a zeolitic composite having the desired ratio of zeolite X to zeolite A. In the preferred embodiment, this is accomplished by using as the starting material an agglomerate that contains substantially pure zeolite X, and converting substantially all of the inert binder to zeolite A. In this case the inert binder is present in the agglomerate at a concentration that will result in the preparation of a composite product having the desired ratio of zeolite X to zeolite A. If the agglomerate contains an amount of inert binder in excess of the amount which will produce the desired zeolite X/zeolite A ratio, the inert binder conversion reaction can be controlled to produce the desired composite by limiting the amount of inert binder converted to zeolite A. As noted above, the ratio of zeolite X to zeolite A in the product can also be controlled by starting with zeolite X-zeolite A composites and/or by converting the inert binder to zeolite A and zeolite X, or by using a zeolite A-containing agglomerate as the starting material and converting the inert binder to zeolite X or to both zeolite X and zeolite A.

The chemical reagent used in the zeolite-forming reaction will depend upon which inert binder is being used as the starting material. If the inert binder is silica, the reagent will desirably be a water-soluble aluminate, and preferably will be a mixture of sodium aluminate and sodium hydroxide or both sodium hydroxide and potassium hydroxide. The water-soluble aluminate can be prepared by, for example, reacting hydrated aluminum hydroxide with an aqueous solution of sodium hydroxide. If inert binder is a clay, which contains both silica and alumina, the chemical reagent can be an aqueous solution of sodium hydroxide or sodium hydroxide-potassium hydroxide mixture. If the inert binder is alumina, the desired reagent will be a mixture of sodium silicate and sodium hydroxide or sodium hydroxide-potassium hydroxide mixture. The ratio of inert binder to chemical reagent can vary over a wide range, and those familiar with zeolite synthesis can easily determine the optimum ratios for the conversion reaction.

As noted above, the composite zeolite A-zeolite X adsorbents used in the invention are at least partially, and preferably substantially completely exchanged with divalent cations in preparation for use in the gas purification applications of the invention. Although it is usually preferably that the composite be substantially completely exchanged with divalent cations, it is sometimes preferable to only partially exchange the composite, so that zeolite A and zeolite X exchangeable cations will include sodium or both sodium and potassium type A and type X zeolite crystal units in addition to divalent cations. Divalent cations with which the zeolitic composite can be exchanged onto the zeolite composite include calcium, magnesium, strontium, barium, zinc, copper, cadmium, cobalt, manganese, iron, nickel or mixtures thereof. The preferred divalent cations are the Group 2A ions, particularly calcium, magnesium, strontium and barium. The most preferred divalent cation is calcium.

Although clays and aluminas are also of considerable interest for use in making the zeolitic composites, the invention will be described in detail as it applies to the preparation of a composite zeolitic adsorbent from an agglomerated zeolite X in which silica is the inert binder, and wherein the silica is converted to zeolite A.

A preferred procedure for converting the agglomerated zeolite to substantially binderless composite zeolite is described in DE-A 20 16 838, and in U.S. - A - 4,913,850, U.S. - A - 5,075,084 and U.S. - A - 5,962,358. According to this procedure, zeolite X containing, as exchangeable cations, sodium or sodium and potassium ions, is agglomerated with a silica binder. The agglomerate is then treated with an aqueous solution of sodium aluminate and sodium hydroxide or a mixture of sodium hydroxide and potassium hydroxide for a sufficient period of time to convert some or all of the silica binder to zeolite sodium A or zeolite sodium-potassium A. The converted agglomerate is next subjected to a cation exchange procedure to convert some or all of the exchangeable cations of the composite zeolite to divalent cations. However, as noted above, if some of the exchangeable cations of the composite are potassium ions, it is preferable to convert these to sodium ions prior to divalent cation exchange. The divalent cation-exchanged product is then activated by, for example, heating it to a high temperature.

Considering the preferred method of preparing the composite zeolitic adsorbents in more detail, the desired zeolite X, for example zeolite sodium X, is first mixed with a silica binding agent sufficiently to form a uniform blend. The relative proportions of zeolite X and silica may vary over a wide range, and the actual proportions used will be determined by the amount of zeolite A that is desired in the final product, as described above.

The blended mixture is next aggregated by any suitable method, for example, by extrusion and pelletizing, or by bead formation. The agglomeration process is carried out under conditions that will produce "green" aggregate of the desired particle size. In general, the average dimension of the agglomerated particles will desirably be in the range of about 0.2 to about 15 mm and will preferably be in the range of about 0.5 to about 5 mm. The green aggregate can be directly contacted with aluminate solution to convert silica in the composite to zeolite A, or it can be cured by heating it to a temperature in the range of about 400 to about 700° C for a sufficient period of time to effect the desired curing, and then treated with aluminate solution.

The conversion of silica in the aggregate to zeolite A is effected by reacting the aggregate with an aqueous alkaline aluminate solution, such as sodium aluminate. The aluminate solution can be prepared by , for example, dissolving alumina hydrate in a sodium hydroxide solution, preferably at elevated temperatures, such as at the boiling temperature, to form a concentrate, and diluting the concentrate with sufficient water to form the desired reaction solution. The reaction between the aggregate particles and the aluminate solution is desirably carried out under conditions that provide continuous intimate contact between the aluminate and the particles. In a preferred procedure, the aqueous sodium aluminate solution is circulated through the granulated aggregate at ambient temperature for several hours, after which the reaction mixture is heated, preferably to a temperature in the range of about 70 to about 90° C, preferably in a stepwise procedure carried out over a period of several hours, until the desired degree of conversion of silica to zeolite A is attained. It is usually desirable to convert at least 90% by weight, and preferably substantially all, of the silica binder to zeolite A, to produce a product that will provide the maximum adsorption efficiency. When the desired degree of conversion of silica to zeolite A is attained, the mixed zeolite is washed with water and dried.

The final step of the zeolite preparation process is divalent cation exchange. The divalent cations can be any of those mentioned above, but calcium is the preferred cation, since calcium ions produce a zeolitic composite which is particularly effective for the separation of nitrogen oxides and hydrocarbons from gases such as air.

Divalent cation-exchange can be carried out by contacting the composite with sources of divalent cations, including bases, such as Ca(OH)₂, Mg(OH)₂, etc., and salts, such as CaCl₂, MgCl₂, etc., at temperatures in the range of, for example, about 25 to about 200° C. Preferably, the composite is partially or fully exchanged with calcium ions. The ion-exchange step can be carried out by any of the well-known procedures, for example, by contacting the composite particles with the aqueous base or salt solution of the desired ions, thereby substituting at least part of the sodium or sodium and potassium ions initially on the particles with the selected exchange ions. The divalent cation exchange is generally carried out under conditions that will effect the production of a product in which at least part, and preferably about 50 to about 100% by equivalence, of the exchangeable cations of the zeolite A and at least part, and preferably at least about 50 to about 100% by equivalence, of the exchangeable cations of the zeolite X are divalent cations.

The CaLSX, CaMSX and CaX zeolites which can be included in the composite zeolitic adsorbent are X-type zeolites (FAU zeolites) with respective values of silicon-to-aluminium atomic ration of the zeolitic phase, i.e., binderless crystalline phase, that range approximately from 0.9 to 1.1, 1.1 to 1.15 and 1.16 to 3.0 respectively, and whose exchangeable cations are on an equivalent basis include about 0 to about 100% calcium ions, and about 100 to about 0% other ions, the other ions being selected from the other group consisting of Group IA ions such as lithium, sodium and potassium, from Group IIA ions other than calcium from Group IB ions other than gold, from Group IIB ions other than mercury, and from ions of the lanthanides, and mixtures of these, preferably, however, from 0.9 to 1.15, and a cation composition of this adsorbent comprises from about 50 to about 100% of calcium ions and about 50 to about 0% of cations being selected from the Group IA such as lithium, sodium and potassium, from Group IIA ions other than calcium, from Group IB ions other than gold, from IIB ions other than mercury, and from ions of the lanthanides, and mixtures of these, and especially preferred between 0.95 and 1.05, and a cation composition that comprises from about 90 to about 100% of calcium ions and about 10 to about 0% of cations being selected from the group consisting of Group IA ions such as lithium, sodium and potassium, from Group IIA ions other than calcium, from IB ions other than gold, from Group IIB ions other than mercury, and from ions of the lanthanides, and mixtures of these. The FAU materials with a silicon-to aluminium atomic ration from 0.9 to 1.15, and the described cation compositions will here and further on be named as calcium Low-Silicon X-type zeolite (CaLSX type zeolite).

After divalent cation-exchange, the composite is generally washed, dried and activated, preferably by heating it with a dry gas, such as air or nitrogen, at a temperature in the range of about 200 to about 800° C, and preferably at a temperature in the range of about 300 to about 700° C.

The method of purifying air according to the invention preferably employs the composite zeolite adsorbent as a third layer downstream of first and second layers. The first layer is preferably employed to remove water vapour, the second to remove carbon dioxide.

The first adsorbent layer is preferably activated alumina (AA) or zeolite NaX, but any other water adsorbent material may be used.

The second adsorbent layer is zeolite X material, preferably NaX, NaMSX or NaLSX. A NaLSX-type zeolite, which is understood as a zeolite X material with a silicon-to-aluminum atomic ratio in the range between 0.9:1 and 1.1:1, is particularly preferred but any other adsorbent of carbon dioxide can be used instead. The crystal structure of this material is that of the mineral faujasite and is denoted as FAU, by the Structure Commission of the International Zeolite Association. It is however possible to use the composite zeolitic adsorbent as the first and/or second layer as well as the third layer.

In a preferred embodiment, the air purification method according to the invention of the present invention is performed upstream of a cryogenic air separation unit. The composite adsorbents of the present invention are used in from of shaped particles also known as secondary particles (macro-particles). These secondary particles may be shaped by a series of methods into various geometrical forms such as beads, extrudates, and hollow extrudates. Inorganic binder materials are added to the zeolitic crystalline phase prior to the shaping process. These binders allow for necessary mechanical strength of the particles and creation of a transport macropore system in the interior of the latter particles needed for effective mass transfer performance properties with regard to sorbing species. Binder content may vary depending upon the type of binder material used and shaping procedure, but it is typically about 5 to about 25 wt.% of the final product.

PSA and TSA procedures may be used for performing the method according to the invention. These are generally cyclical and comprise at least an adsorption step and an adsorbent regeneration step. In TSA processes, the adsorption step is generally carried out at a temperature in the range of about 5 to about 50° C and the adsorbent regeneration step is generally carried out at a temperature in the range of about 100 to about 250° C.

It will be appreciated that it is within the scope of the present invention to utilize conventional equipment to monitor and automatically regulate the synthesis and gas separation methods so that they can be fully automated to run continuously in an efficient manner.

The invention is further illustrated by the following examples, in which, unless otherwise indicated, parts, percentages and ratios are on a mole basis.

### EXAMPLE 1

Low silicon X (LSX) is synthesized with a Si/Al atomic ratio of 1.0 according to the procedures described by G. H. Kuhl in GB - A - 1,580,928. The resulting product, LSX zeolite having sodium and potassium ions as exchangeable cations, is then converted to sodium LSX by four static exchanges with 20 ml of 1.0 N NaCI solution per g of zeolite at 80° C. After each exchange, the sample is washed with aqueous NaOH (0.01 N). The resulting sodium LSX powder is granulated and then calcium exchanged following the general procedure described by Heinze et al. for zeolite X in U.S. - A - 3,773,690, Examples 2 and 5. The resulting product, in bead form, is composed of approximately 80 wt.% NaLSX and 20 wt.% SiO₂ as inert binder. The SiO₂ binder is converted into sodium zeolite A by treating the beads with an aqueous alkaline solution of sodium aluminate. The resulting product, binderless NaLSX-NaA zeolite composite, is calcium exchanged by treatment with calcium chloride solution in a glass column. The analysis of the dried and activated product is expected to show an ion exchange capacity of about 97% and to have a composition of about 60 wt.% CaLSX and 40 wt.% CaA.

### EXAMPLE 2

This example illustrates the testing of our purification method of the invention on a typical bench-scale TSA PPU unit, using a binderless composite zeolitic adsorbent of the invention prepared in a manner similar to that set out. (Example 1.) The air included impurities in the ranges set out in Table 1. The lower detection limits of the components were established by FTIR analysis.

It was found that conventional NaX completely removed water vapour, carbon dioxide, acetylene, propylene, and n-butane impurities but removed less than half the nitrous oxide, ethylene, ethane and propane impurities. NaLSX gave similar results.

The composite zeolitic adsorbent (50% CaLSX 50% CaA) gave improved results. Water vapour, actetylene, propylene, and n-butane were still completely removed. But now so were ethylene and nitrous oxide. Moreover more than 80% of the ethane and propane impurities were removed.

**TABLE 1**

| TSA - PPU Performance | | | | |
|---|---|---|---|---|
| Feed Pressure = 86-110 psia | | | | |
| Feed Temperature = 12-25°C | | | | |
| Total Bed Height = 59 inches | | | | |
| | | | | |
| Feed Impurity (conc.ppm) | Detection Limit (ppm) | UOP APG II % Removal | BOC NaLSX % Removal | Present Invention Composite Adsorbent* % Removal |
| | | | | |
| Water | 1 | 100 | 100 | 100 |
| (saturated) | | | | |
| CO₂ (400) | 0.001 | 100 | 100 | 100 |
| N₂O (0.3-0.35) | 0.005 | 35 | 45 | 100 |
| CH₄ (2.2) | 0.01 | 0 | 0 | 0 |
| C₂H₂ (0.4-0.48) | 0.007 | 100 | 100 | 100 |
| C₂H₄ (1.4-1.6) | 0.01 | 35 | 40 | 100 |
| C₂H₆ (1.4) | 0.01 | 10 | 10 | 84 |
| C₃H₆ (0.55-0.75) | 0.01 | 100 | 100 | 100 |
| C₃H₈ (1.5-1.6) | 0.05 | 40 | 35 | 98 |
| n-C₄H₁₀ (1.6- .1.8) | 0.02 | 100 | 100 | 100 |
| | | | | |

| | | | | |
|---|---|---|---|---|
| *: 50% CaLSX and 50% CaA. | | | | |

## Claims

1. The use of a composite zeolitic adsorbent upstream of a cryogenic air separation unit selectively to adsorb nitrous oxide, ethylene, ethane and propane from air that has had water vapour and carbon dioxide removed therefrom, the composite zeolitic adsorbent comprising 5 to 95% by weight of zeolite A and 95 to 5% by weight of zeolite X, wherein some or all of the exchangeable cations of the zeolite A and some or all of the exchangeable cations of the zeolite X are divalent cations.

2. The use according to claim 1, wherein the divalent cations are calcium cations.

3. A method of purifying air comprising the step of removing upstream of a cryogenic air separation unit nitrous oxide and at least one low molecular weight hydrocarbon from the air by subjecting the air to a cyclical adsorption procedure comprising an adsorption step and an adsorbent regeneration step using a composite zeolitic adsorbent which selectively adsorbs nitrous oxide, ethylene, ethane and propane from air free of water vapour and carbon dioxide and which comprises 5 to 95% by weight zeolite A and 95 to 5% by weight zeolite X, and wherein some or all of the exchangeable cations of said zeolite A and some or all of the exchangeable cations of said zeolite X are divalent cations.

4. A method according to claim 3, wherein the adsorption procedure is a temperature swing adsorption procedure.

5. A method according to claim 3 or claim 4, in which the composite zeolite adsorbent forms a third adsorbent layer, there being in gas flow sequence a first adsorbent layer that substantially removes water vapour from the air stream and a second adsorbent layer comprising a NaX, NaMSX or NaLSX zeolite which substantially removes carbon dioxide from the air.

6. A method according to claim 5, wherein from 50 to 100% of the exchangeable cations of the zeolite A and 50 to 100% of the exchangeable cations of the zeolite X each comprise calcium, magnesium, strontium, barium, zinc, copper, cadmium, cobalt, manganese, iron, nickel or mixtures thereof.

7. A method according to claim 6, wherein at least 50% of the zeolite X has a Si/Al atomic ratio of less than 1.15:1 but greater than or equal to 0.9:1.

8. A method according to any one of claims 3 to 7, wherein the composite zeolitic adsorbent comprises from 20 to 50% by weight of zeolite A and from 80 to 50% by weight of zeolite X.

9. A method according to any one of claims 3 to 8, wherein the composite zeolitic adsorbent is prepared by a process comprising the step of contacting an agglomerate comprising (i) at least one of the zeolite A and the zeolite X and (ii) an inert binder comprising silica, clay, alumina, or combinations thereof with (iii) a reagent which effects the conversion of at least part of the inert binder to the other of the zeolite A and the zeolite X.

10. A method according to claim 9, wherein said process comprises
(a) forming a mixture comprising (i) an agglomerate comprising silica and zeolite X comprising sodium ions or both sodium and potassium ions,said zeolite X having a Si/Al atomic ratio in the range of about 0.9 up to 1.25, and (ii) an aqueous alkaline aluminate solution comprising sodium hydroxide, potassium hydroxide, or mixtures thereof;
(b) maintaining said mixture at a temperature in the range of about 25 to about 100 C for a period of time sufficient to convert at least 50% of said silica to zeolite A; and
(c) at least partially exchanging the product of step b) with divalent cations

11. A method according to any one of claims 3 to 10, wherein the X zeolite of the composite zeolitic adsorbent is CaLSX having a silicon-to-aluminum atomic ratio of the zeolitic phase between 0.95 and 1.05 and a cation composition that comprises from about 90% to about 100% of calcium ions and about 10 to about 0% of cations being selected from the group consisting of Group IA ions, from Group IIA ions other than calcium, from Group IB ions other than gold, from Group IIB ions other than mercury, and from ions of the lanthanides, and mixtures of these.

12. A method according to claim 11, wherein said Group IA ions are selected from the group consisting of lithium, sodium and potassium.

13. A method according to any one of claims 3 to 12, wherein the zeolite A is CaA.

## Patentansprüche

1. Verwendung eines Komposit-Zeolith-Adsorptionsmittels stromauf einer kryogenen Lufttrenneinheit zum wahlweisen Adsorbieren von Stickstoffoxid, Ethylen, Ethan und Propan aus Luft, aus welcher Wasserdampf und Kohlendioxid abgeschieden worden ist, wobei das Komposit-Zeolith-Adsorptionsmittel 5 bis 95 Gew.-% Zeolith A und 95 bis 5 Gew.-% Zeolith X enthält, wobei einige oder sämtliche der austauschbaren Kationen des Zeoliths A und einige oder sämtliche der austauschbaren Kationen des Zeoliths X divalente Kationen sind.

2. Verwendung nach Anspruch 1, wobei die divalenten Kationen Kalzium-Kationen sind.

3. Verfahren zum Reinigen von Luft, umfassend den Schritt des Abscheidens von Distickstoffoxid und mindestens einem Kohlenstoff mit niedrigem Molekulargewicht stromauf einer kryogenen Lufttrenneinheit aus der Luft durch Unterziehen der Luft einem zyklischen Adsorptionsprozeß, der einen Adsorptionsschritt und einen Adsorptionsmittelregenerationsschritt unter Verwendung eines Komposit-Zeolith-Adsorptionsmittels umfasst, das Distickstoffoxid, Ethylen, Ethan und Propan selektiv aus Luft adsorbiert, die frei von Wasserdampf und Kohlendioxid ist, und das 5 bis 95 Gew.-% Zeolith A und 95 bis 5 Gew.-% Zeolith X aufweist, und bei welchem einige oder sämtliche der austauschbaren Kationen des Zeoliths A und einige oder sämtliche der austauschbaren Kationen des Zeoliths X divalente Kationen sind.

4. Verfahren nach Anspruch 3, wobei der Adsorptionsprozeß ein Temperaturwechsel-Adsorptionsprozeß ist.

5. Verfahren nach Anspruch 3 oder Anspruch 4, wobei das Komposit-Zeolith-Adsorptionsmittel eine dritte Adsorptionsmittelschicht bildet, wobei in der Reihenfolge der Gasströmung eine erste Adsorptionsmittelschicht, die im wesentlichen Wasserdampf aus dem Luftstrom abscheidet, und eine zweite Adsorptionsmittelschicht vorhanden ist, die ein NaX-, NaMSX- oder NaLSX-Zeolith umfasst, das im wesentlichen Kohlendioxid aus der Luft abscheidet.

6. Verfahren nach Anspruch 5, wobei 50 bis 100% der austauschbaren Kationen des Zeoliths A und 50 bis 100% der austauschbaren Kationen des Zeoliths X jeweils Kalzium, Magnesium, Strontium, Barium, Zink, Kupfer, Kadmium, Kobalt, Mangan, Eisen, Nickel oder Gemische hiervon umfassen.

7. Verfahren nach Anspruch 6, wobei mindestens 50% des Zeoliths X ein Si/Al-Atomverhältnis von weniger als 1,15 : 1, aber größer als oder gleich 0,9 : 1 haben.

8. Verfahren nach einem der Ansprüche 3 bis 7, wobei das Komposit-Zeolith-Adsorptionsmittel 20 bis 50 Gew.-% Zeolith A und 80 bis 50 Gew.-% Zeolith X enthält.

9. Verfahren nach einem der Ansprüche 3 bis 8, wobei das Komposit-Zeolith-Adsorptionsmittel durch einen Prozeß hergestellt wird, der dem Schritt des In-Berührung-Bringens eines Agglomerats, das (i) mindestens eines der Stoffe Zeolith A und Zeolith X und (ii) einen inerten Binder, der Silika, Ton, Aluminiumoxid oder Kombinationen hiervon umfasst, mit (iii) einem Reagens umfasst, das die Umwandlung von mindestens einem Teil des inerten Binders zum anderen der Stoffe Zeolith A und Zeolith X bewirkt.

10. Verfahren nach Anspruch 9, wobei der Prozeß umfasst:
a) Bilden eines Gemischs, das (i) ein Agglomerat, das Silika und Zeolith X mit Natriumionen oder mit sowohl Natrium- als auch Kaliumionen enthält, wobei das Zeolith X ein Si/Al-Atomverhältnis im Bereich von etwa 0,9 bis zu 1,25 enthält, und (ii) eine wässrige alkalische Aluminatlösung enthält, das aus Natriumhydroxid, Kaliumhydroxid oder Gemischen hiervon besteht,
b) Halten des Gemischs auf einer Temperatur im Bereich von etwa 25 bis etwa 100°C während einer ausreichenden Zeitdauer, um mindestens 50% des Silika zu Zeolith A umzuwandeln, und
c) mindestens teilweises Austauschen des Produkts nach Schritt (b) mit divalenten Kationen.

11. Verfahren nach einem der Ansprüche 3 bis 10, wobei das Zeolith X des Komposit-Zeolith-Adsorptionsmittels CaLSX mit einem Silizium/Aluminium-Atomverhältnis der Zeolithphase zwischen 0,95 und 1,05 und einer Kationenzusammensetzung ist, die von etwa 90% bis etwa 100% Kalziumionen und etwa 10 bis etwa 0% Kationen reicht, die aus der Gruppe ausgewählt ist, die aus Ionen der Gruppe IA, Ionen der Gruppe IIA außer Kalzium, Ionen der Gruppe IB außer Gold, Ionen der Gruppe IIB außer Quecksilber, und Ionen der Lanthanide ausgewählt ist, und Gemischen von diesen umfasst.

12. Verfahren nach Anspruch 11, wobei die Ionen der Gruppe IA aus der Gruppe ausgewählt sind, die aus Lithium, Natrium und Kalium besteht.

13. Verfahren nach einem der Ansprüche 3 bis 12, wobei das Zeolith A CaA ist.

## Revendications

1. Utilisation d'un adsorbant zéolithique composite en amont d'une unité de séparation cryogénique de l'air, afin d'adsorber sélectivement l'oxyde nitreux, l'éthylène, l'éthane et le propane d'air dont on a éliminé la vapeur d'eau et le dioxyde d'azote, l'adsorbant zéolithique composite comprenant de 5 à 95 % en poids de zéolithe A et de 95 à 5 % en poids de zéolithe X, dans laquelle une partie ou la totalité des cations échangeables de la zéolithe A et une partie ou la totalité des cations échangeables de la zéolithe X sont des cations divalents.

2. Utilisation selon la revendication 1, dans laquelle les cations divalents sont des cations calcium.

3. Procédé d'épuration de l'air comprenant l'étape consistant à éliminer de l'air, en amont d'une unité de séparation cryogénique de l'air, l'oxyde nitreux et au moins un hydrocarbure à faible poids moléculaire, par la soumission de l'air à une procédure d'adsorption cyclique comprenant une étape d'adsorption et une étape de régénération de l'adsorbant utilisant un adsorbant zéolithique composite qui adsorbe sélectivement l'oxyde nitreux, l'éthylène, l'éthane et le propane d'air débarrassé de la vapeur d'eau et du dioxyde d'azote, et qui comprend de 5 à 95 % en poids de zéolithe A et de 95 à 5 % en poids de zéolithe X, et dans lequel une partie ou la totalité des cations échangeables de la zéolithe A et une partie ou la totalité des cations échangeables de la zéolithe X sont des cations divalents.

4. Procédé selon la revendication 3, dans lequel la procédure d'adsorption est une procédure d'adsorption modulée en température.

5. Procédé selon la revendication 3 ou la revendication 4, dans lequel l'adsorbant zéolithique composite forme une troisième couche d'adsorbant, avec présentes, en séquence d'écoulement gazeux, une première couche d'adsorbant qui élimine essentiellement la vapeur d'eau du courant d'air et une deuxième couche d'adsorbant comprenant une zéolithe NaX, NaMSX ou NaLSX qui élimine essentiellement le dioxyde de carbone de l'air.

6. Procédé selon la revendication 5, dans lequel de 50 à 100 % des cations échangeables de la zéolithe A et de 50 à 100 % des cations échangeables de la zéolithe X comprennent chacun calcium, magnésium, strontium, baryum, zinc, cuivre, cadmium, cobalt, manganèse, fer, nickel ou mélanges de ceux-ci.

7. Procédé selon la revendication 6, dans lequel au moins 50 % de la zéolithe X possède un rapport atomique Si/A1 inférieur à 1,15/1 mais supérieur ou égal à 0,9/1.

8. Procédé selon l'une quelconque des revendications 3 à 7, dans lequel l'adsorbant zéolithique composite comprend de 20 à 50 % en poids de zéolithe A et de 80 à 50 % en poids de zéolithe X.

9. Procédé selon l'une quelconque des revendications 3 à 8, dans lequel l'adsorbant zéolithique composite est préparé par un procédé comprenant l'étape de mise en contact d'un agglomérat comprenant (i) au moins l'une d'entre la zéolithe A et la zéolithe X, et (ii) un liant inerte comprenant la silice, l'argile, l'alumine ou des combinaisons de celles-ci avec (iii) un réactif qui réalise la conversion d'une partie au moins du liant inerte en l'autre de la zéolithe A et de la zéolithe X.

10. Procédé selon la revendication 9, ledit procédé comprenant :
(a) la formation d'un mélange comprenant (i) un agglomérat comprenant de la silice et de la zéolithe X comprenant des ions sodium ou à la fois des ions sodium et des ions potassium, ladite zéolithe X ayant un rapport atomique Si/Al compris dans une plage d'environ 0,9 jusqu'à 1,25, et (ii) une solution aqueuse d'aluminate alcalin comprenant de l'hydroxyde de sodium, de l'hydroxyde de potassium ou des mélanges de ceux-ci ;
(b) le maintien dudit mélange à une température comprise dans une plage d'environ 25 à environ 100°C pendant une durée suffisante pour convertir au moins 50 % de ladite silice en zéolithe A ; et
(c) l'échange au moins partiel du produit de l'étape (b) avec des cations divalents.

11. Procédé selon l'une quelconque des revendications 3 à 10, dans lequel la zéolithe X de l'adsorbant zéolithique composite est CaLSX ayant un rapport atomique du silicium à l'aluminium de la phase zéolithique compris entre 0,95 et 1,05, et une composition pour les cations qui comprend d'environ 90 % à environ 100 % d'ions calcium, et d'environ 10 à environ 0 % de cations choisis parmi le groupe se composant des ions du Groupe IA, les ions du Groupe IIA autres que le calcium, les ions du Groupe IB autres que l'or, les ions du Groupe IIB autres que le mercure, et les ions des lanthanides, et des mélanges de ceux-ci.

12. Procédé selon la revendication 11, dans lequel lesdits ions du Groupe IA sont choisi dans le groupe se composant du lithium, du sodium et du potassium.

13. Procédé selon l'une quelconque des revendications 3 à 12, dans lequel la zéolithe A est CaA.
